# EUROPÄISCHE PATENTSCHRIFT

(11) **EP 3 004 582 B1**
(45) Veröffentlichungstag und Bekanntmachung des Hinweises auf die Patenterteilung: **16.08.2017**
(21) Anmeldenummer: 14730119.6
(22) Anmeldetag: 05.06.2014
(51) Int. Cl.: F01N 3/20, F01N 3/28

(54) **AMMONIAKGENERATOR**
AMMONIA GENERATOR
GÉNÉRATEUR D'AMMONIAC

(30) Priorität: 05.06.2013 DE 102013009417
(43) Veröffentlichungstag der Anmeldung: 13.04.2016
(73) Patentinhaber: MAN Diesel & Turbo SE, 86153 Augsburg (DE)
(72) Erfinder: TOSHEV, Plamen, 86157 Augsburg (DE)
(86) Internationale Anmeldenummer: PCT/EP2014/061661
(87) Internationale Veröffentlichungsnummer: WO 2014/195393

(56) Entgegenhaltungen:
- EP-A1- 2 111 916
- WO-A1-2010/032077
- WO-A1-2012/050509
- DE-A1- 10 060 808
- DE-A1-102009 041 345
- DE-A1-102010 045 751
- DE-A1-102010 056 314
- DE-A1-102011 118 049

## Beschreibung

Hierzu ist zwischen einer Düse, welche die wässrige Harnstofflösung in das Abgas einbringt und welche in einer zwischen der Brennkraftmaschine und dem SCR-Katalysator verlaufenden Abgasleitung positioniert ist, und dem SCR-Katalysator, der das Ammoniak als Reduktionsmittel nutzt, eine Prozessstrecke mit zumindest einem Hydrolysekatalysator erforderlich. Düse und Hydrolysekatalysator bilden zusammen einen Ammoniakgenerator.

Die Generierung von Ammoniak aus einer in das Abgas eingebrachten, wässrigen Harnstofflösung ist zum Beispiel aus der DE 10 2009 035 692 A1 sowie aus der DE 10 2009 035 692 A1 bekannt.

Bei aus der Praxis bekannten Ammoniakgeneratoren bereitet eine gleichförmige Verteilung der Harnstofflösung in die über den Hydrolysekatalysator zu leitende Gasströmung Schwierigkeiten. Ferner ist es bei aus der Praxis bekannten Ammoniakgeneratoren nicht möglich, den Hydrolysekatalysator gleichförmig mit der Gasströmung, in welches die wässrige Harnstofflösung eingebracht wurde, zu beaufschlagen. Daher verfügen bekannte Ammoniakgeneratoren nur über eine begrenzte Effektivität.

Die EP 2 111 916 A1 zeigt bereits eine Vorrichtung zur Einspritzung eines Reduktionsmittels über eine Düse in die Abgase eines Dieselmotors, die ein Mischelement aufweist, welches stromaufwärts eines Hydrolysekatalysators und eines SCR-Katalysators zur Verdrallung der Abgase im Einspritzbereich führt. Die WO 2012/050509 zeigt ein Einspritzsystem für Harnstofflösungen für den Einsatz in Abgasreinigungseinrichtungen von Verbrennungsmotoren mit SCR-Katalysatoren aufweisend ein doppelwandiges Gehäuse, welches einen radial inneren Strömungskanal, einen radial äußeren Strömungskanal, welchem der Gasstrom über einen ringförmigen Einlass zugeführt wird, wobei der radial äußere Strömungskanal benachbart einer Einspritzdüse in den radial inneren Strömungskanal übergeht.

Hiervon ausgehend liegt bei vorliegender Erfindung die technische Aufgabe zugrunde, dass ein Amoniakgenerator bestehend aus einer Einspritzdüse für das Reduktionsmittel und einem Hydrolysekatalysator mit verbesserter Wärmeeffizienz bereitgestellt wird.

Diese Aufgabe wird durch einen Ammoniakgenerator nach Anspruch 1 gelöst.

Der erfindungsgemäße Ammoniakgenerator umfasst zumindest ein Drallerzeugungsmittel zur Verdrallung der Gasströmung, in welche die Harnstofflösung einbringbar ist.

Hierzu ist zwischen einer Düse, welche die wässrige Harnstofflösung in das Abgas einbringt und welche in einer zwischen der Brennkraftmaschine und dem SCR-Katalysator verlaufenden Abgasleitung positioniert ist, und dem SCR-Katalysator, der das Ammoniak als Reduktionsmittel nutzt, eine Prozessstrecke mit zumindest einem Hydrolysekatalysator erforderlich. Düse und Hydrolysekatalysator bilden zusammen einen Ammoniakgenerator.

Die Generierung von Ammoniak aus einer in das Abgas eingebrachten, wässrigen Harnstofflösung ist zum Beispiel aus der DE 10 2009 035 692 A1 sowie aus der DE 10 2009 035 692 A1 bekannt.

Bei aus der Praxis bekannten Ammoniakgeneratoren bereitet eine gleichförmige Verteilung der Harnstofflösung in die über den Hydrolysekatalysator zu leitende Gasströmung Schwierigkeiten. Ferner ist es bei aus der Praxis bekannten Ammoniakgeneratoren nicht möglich, den Hydrolysekatalysator gleichförmig mit der Gasströmung, in welches die wässrige Harnstofflösung eingebracht wurde, zu beaufschlagen. Daher verfügen bekannte Ammoniakgeneratoren nur über eine begrenzte Effektivität.

Hiervon ausgehend liegt der vorliegenden Erfindung die Aufgabe zugrunde, einen neuartigen Ammoniakgenerator zu schaffen.

Diese Aufgabe wird durch einen Ammoniakgenerator nach Anspruch 1 gelöst.

Der erfindungsgemäße Ammoniakgenerator umfasst zumindest ein Drallerzeugungsmittel zur Verdrallung der Gasströmung, in welche die Harnstofflösung einbringbar ist.

Das Drallerzeugungsmittel des erfindungsgemäßen Ammoniakgenerators ermöglicht es auf einfache und sichere Art und Weise, die wässrige Harnstofflösung gleichförmig in die Gasströmung einzubringen. Ferner ist es möglich, den Hydrolysekatalysator mit der Gasströmung, in welche die Harnstofflösung gleichförmig eingebracht wurde, gleichförmig zu beaufschlagen. Daher weist der erfindungsgemäße Ammoniakgenerator eine hohe Effektivität auf. Dann, wenn das Drallerzeugungsmittel die Gasströmung vor dem Einbringen der Harnstofflösung in die Gasströmung verdrallt, kann die wässrige Harnstofflösung besonders gleichförmig in die Gasströmung eingebracht werden.

Vorzugsweise umfasst der erfindungsgemäße Ammoniakgenerator weiterhin ein Strömungsverengungsmittel zur Beschleunigung der Gasströmung, in welche die Harnstofflösung einbringbar ist, nämlich zur Strömungsverengung der Gasströmung stromabwärts der Düse. Das Strömungsverengungsmittel des erfindungsgemäßen Ammoniakgenerators unterstützt einerseits das gleichförmige Einbringen der wässrigen Harnstofflösung in die Gasströmung und andererseits die gleichförmige Beaufschlagung des Hydrolysekatalysators mit der Gasströmung, in welche die Harnstofflösung eingebracht wurde. Dadurch kann die Effektivität des Ammoniakgenerators weiter gesteigert werden. Der Ammoniakgenerator weist ein doppelwandiges Gehäuse auf, welches einen radial inneren Strömungskanal, in welchem der Hydrolysekatalysator positioniert ist, und einen radial äußeren Strömungskanal, welchem die Gasströmung zur Verdrallung derselben tangential zuführbar ist, definiert, wobei der radial äußere Strömungskanal im Bereich der Düse in den radial inneren Strömungskanal übergeht. Vorzugsweise bildet der radial äußere Strömungskanal zusammen mit einer tangential in denselben mündenden Gasleitung das Drallerzeugungsmittel, wobei das vorzugsweise vorhandene Strömungsverengungsmittel im Übergangsbereich zwischen dem radial äußeren Strömungskanal und dem radial inneren Strömungskanal stromabwärts der Düse positioniert ist.

Dies erlaubt es mit einfachen Mitteln unter Gewährleistung einer kompakten Bauform des Ammoniakgenerators die Gasströmung, in welche die Harnstofflösung einzubringen ist, vor dem Einbringen der Harnstofflösung zu verdrallen. In Kombination mit der Strömungsverengung stromabwärts der Düse, über welche die Harnstofflösung in die verdrallte Gasströmung eingebracht wird, können so die oben genannten erfindungsgemäßen Vorteile auf engstem Bauraum realisiert werden. Der Hydrolysekatalysator weist eine erste, in Strömungsrichtung des radial inneren Strömungskanals gesehen stromaufwärige und relativ grobzellige Katalysatorstufe und eine zweite, in Strömungsrichtung des radial inneren Strömungskanals gesehen stromabwärtige und relativ feinzellige Katalysatorstufe auf, wobei die Strömungsrichtung des radial äußeren Strömungskanals entgegengesetzt zur Strömungsrichtung des radial inneren Strömungskanals verläuft, und wobei die Gasströmung des äußeren Strömungskanals den radial innen Strömungskanal zumindest im Bereich der ersten Katalysatorstufe zumindest abschnittsweist überstreift. Die tangential in den äußeren Strömungskanal mündende Gasleitung mündet vorzugsweise in einen Abschnitt des äußeren Strömungskanals, der den im radial inneren Strömungskanal positionierten Hydrolysekatalysator abschnittsweise überdeckt. Hierdurch ist es möglich, den Hydrolysekatalysator über die Strömung im radial äußeren Strömungskanal auf eine definierte Temperatur zu bringen und so die Effektivität des erfindungsgemäßen Ammoniakgenerators weiter zu steigern.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematische Darstellung einer Brennkraftmaschine;
- Fig. 2:: einen erfindungsgemäßen Ammoniakgenerator von außen;
- Fig. 3:: den Querschnitt III-III der Fig. 2 durch den erfindungsgemäßen Ammoniakgenerator; und
- Fig. 4:: einen Querschnitt durch einen weiteren nicht erfindungsgemäßen Ammoniakgenerator.

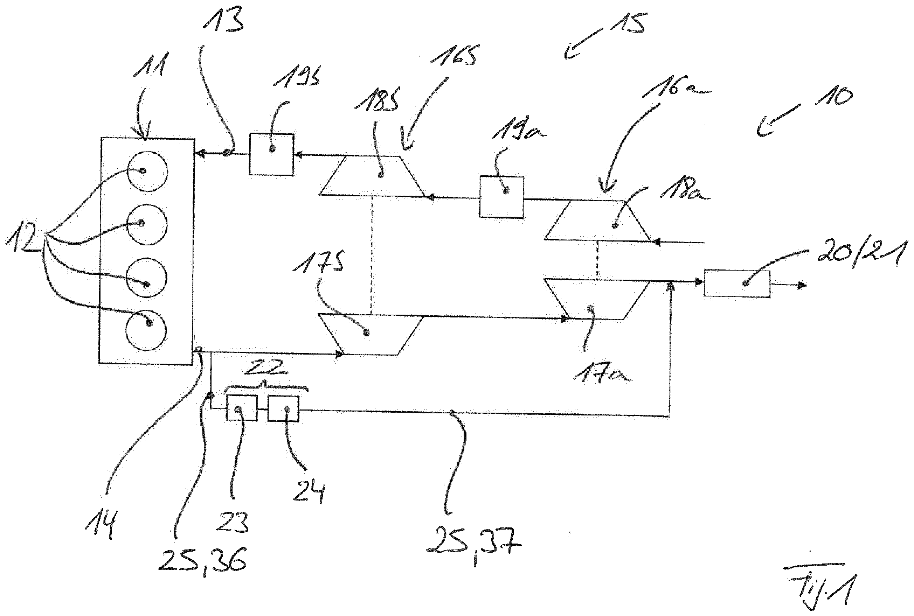

Fig. 1 zeigt eine stark schematisierte Ansicht einer Brennkraftmaschine 10, bei welcher es sich vorzugsweise um eine mit Schweröl betriebene Schiffsdieselbrennkraftmaschine handelt. Es sei an dieser Stelle darauf hingewiesen, dass die Konfiguration der Brennkraftmaschine 10 der Fig. 1 exemplarischer Natur ist und die Erfindung nicht auf diese Brennkraftmaschinenkonfiguration beschränkt ist.

Die in Fig. 1 gezeigte Brennkraftmaschine 10 verfügt über einen Motor 11 mit mehreren Zylindern 12, wobei gemäß Fig. 1 den Zylindern 11 zur Verbrennung von Kraftstoff Ladeluft 13 zugeführt wird, und wobei bei der Verbrennung des Kraftstoffs in den Zylindern 11 entstehendes Abgas 14 von den Zylindern 12 abgeführt werden kann.

Die Brennkraftmaschine 10 der Fig. 1 verfügt über eine Aufladungsvorrichtung 15, die im gezeigten Ausführungsbeispiel zweistufig mit einem Niederdruckturbolader 16a und einem Hochdruckturbolader 16b ausgeführt ist.

Ladeluft 13, die den Zylindern 12 des Motors 11 der Brennkraftmaschine 10 zugeführt wird, wird zunächst in einem Niederdruckverdichter 18a des Niederdruckturboladers 16a und anschließend in einem Hochdruckverdichter 18b des Hochdruckturboladers 16b verdichtet, wobei hierzu benötigte Energie durch das Entspannen des Abgases 14 einerseits in der Hochdruckturbine 17b des Hochdruckturboladers 16b und andererseits in der Niederdruckturbine 17a des Niederdruckturboladers 16a gewonnen wird.

Das Abgas 14, welches die Zylinder 12 des Motors 11 verlässt, gelangt zunächst in den Bereich der Hochdruckturbine 17b des Hochdruckturboladers 16b, wobei in der Hochdruckturbine 17b des Hochdruckturboladers 16b bei den Entspannung des Abgases 14 gewonnene Energie genutzt wird, um den Hochdruckverdichter 18b des Hochdruckturboladers 16b anzutreiben. Anschließend gelangt das Abgas in den Bereich der Niederdruckturbine 17a des Niederdruckturboladers 16a, wobei in der Niederdruckturbine 17a gewonnene Energie genutzt wird, um den Niederdruckverdichter 18a des Niederdruckturboladers 16a anzutreiben. Gemäß Fig. 1 ist sowohl stromabwärts des Niederdruckverdichters 18a als auch stromabwärts des Hochdruckverdichters 18b jeweils ein Ladeluftkühler 19a bzw. 19b positioniert, um die Ladeluft 13 zu kühlen.

Gemäß Fig. 1 umfasst die Brennkraftmaschine 10 weiterhin eine Abgasreinigungsvorrichtung 20, die zumindest einen SCR-Katalysator 21 umfasst.

Im SCR-Katalysator 21 der Abgasreinigungsvorrichtung 20 wird als Reduktionsmittel Ammoniak genutzt, wobei das Ammoniak von einem Ammoniakgenerator 22 bereitgestellt wird. Der Ammoniakgenerator 22 verfügt über eine Düse 23, um in eine Gasströmung eine wässrige Harnstofflösung einzubringen, wobei der Düse 23 des Ammoniakgenerators 22 ein Hydrolysekatalysator 24 des Ammoniakgenerators 22 nachgelagert ist, in welchem die wässrige Harnstofflösung zu Ammoniak, Kohlendioxid und Wasserdampf zersetzt wird.

Im Ausführungsbeispiel der Fig. 1 handelt es sich bei der Gasströmung, die über den Ammoniakgenerator 22 geleitet wird, um Abgas, welches in Strömungsrichtung des Abgases 14 gesehen stromaufwärts der Aufladungsvorrichtung 15, nämlich stromaufwärts der Hochdruckturbine 17b, über eine Bypassleitung 25 und ein nicht gezeigtes Wastegateventil vom Abgas 14 abgezweigt wird, und welches stromabwärts der Aufladungsvorrichtung 15, nämlich gemäß Fig. 1 stromabwärts der Niederdruckturbine 17a, und stromaufwärts des SCR-Katalysators 21 wieder in das Abgas eingeleitet wird.

Obwohl das Einbringen der wässrigen Harnstofflösung in eine vom Abgas 14 über die Bypassleitung 25 abgezweigten Abgasteilströmung bevorzugt ist, ist es im Unterschied hierzu auch möglich, stromabwärts des Hochdruckverdichters 18b und stromaufwärts des Ladeluftkühlers 19b verdichtete Ladeluft abzuzweigen und dieselbe über den Ammoniakgenerator 22 zu führen, um dann die wässrige Harnstofflösung über die Düse 23 in einen Teil der Ladeluft einzubringen und demnach als Gasströmung nicht Abgas sondern Ladeluft über den Ammoniakgenerator 22 zu führen. Unter dem Begriff Gasströmung kann demnach einerseits eine Abgasteilströmung und andererseits eine Ladeluftteilströmung verstanden werden, die über den Ammoniakgenerator 22 geführt werden kann.

Die hier vorliegende Erfindung betrifft Details des Ammoniakgenerators 22, mit Hilfe dessen effektiv die Harnstofflösung in Ammoniak, Kohlendioxid und Wasserdampf umgesetzt werden kann.

Der erfindungsgemäße Ammoniakgenerator 22 verfügt zumindest über ein Drallerzeugungsmittel und vorzugsweise weiterhin über ein Strömungsverengungsmittel. Über das Drallerzeugungsmittel wird die Gasströmung, in welche die Harnstofflösung eingebracht wird, verdrallt, vorzugsweise vor dem Einbringen der Harnstofflösung in die Gasströmung. Über das vorzugsweise vorhandene Strömungsverengungsmittel ist die Gasströmung hinsichtlich ihres Strömungsquerschnitts einschnürbar und damit beschleunigbar, nämlich stromabwärts der Düse 23. Wie bereits ausgeführt, kann es sich bei der Gasströmung um einen vom Abgas oder von der Ladeluft abgezweigten Teilstrom handeln. In jedem Fall ist es möglich, infolge der Verdrallung der Gasströmung und der vorzugweise in Kombination genutzten Verengung bzw. Beschleunigung der Gasströmung einerseits die Harnstofflösung effektiv und gleichförmig in der Gasströmung zu verteilen und andererseits den Hydrolysekatalysator 24 gleichförmig mit der Gasströmung und der in die Gasströmung eingebrachten Harnstofflösung zu beaufschlagen, um so eine effektive Umsetzung der Harnstofflösung in Ammoniak, Kohlendioxid und Wasserdampf zu gewährleisten.

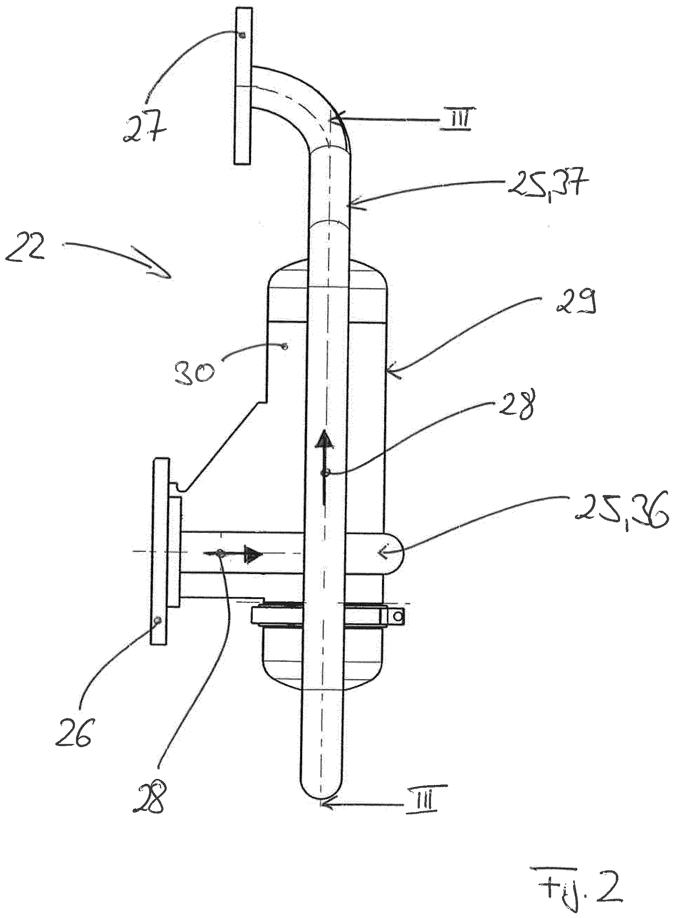

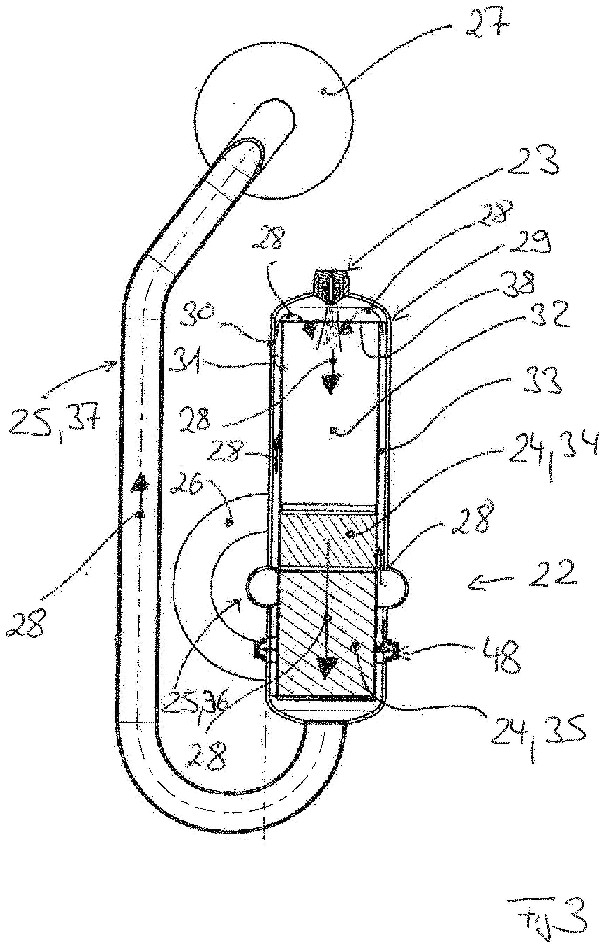

Fig. 2 und 3 zeigen ein bevorzugtes Ausführungsbeispiel eines Ammoniakgenerators 22, der, wie bereits ausgeführt, zumindest die Düse 23 und den Hydrolysekatalysator 24 umfasst, wobei der Ammoniakgenerator 22 in Fig. 2 und 3 zusammen mit der Bypassleitung 25 gezeigt ist. Über den mit dem Flansch 26 zusammenwirkenden Abschnitt der Bypassleitung 25 wird die Gasströmung dem Ammoniakgenerator 22 zugeführt, über den mit dem Flansch 27 zusammenwirkenden Abschnitt der Bypassleitung 25 kann anschließend die Gasströmung mit dem Ammoniak in Richtung auf den SCR-Katalysator 21 geleitet werden. Pfeile 28 verdeutlichen die Gasströmung durch die Bypassleitung 25 und den Ammoniakgenerator 22.

Der Ammoniakgenerator 22 des in Fig. 2 und 3 gezeigten, bevorzugten Ausführungsbeispiels verfügt über ein doppelwandiges Gehäuse 29 mit einer radial äußeren Gehäusewand 30 und einer radial inneren Gehäusewand 31, die konzentrisch bzw. koaxial zueinander verlaufen, wobei das doppelwandige Gehäuse 29 bzw. die beiden Gehäusewände 30 und 31 einen radial inneren Strömungskanal 32 und einen radial äußeren Strömungskanal 33 definieren.

In dem radial inneren Strömungskanal 32 ist der Hydrolysekatalysator 24 positioniert, der im gezeigten, bevorzugten Ausführungsbeispiel zwei Katalysatorstufen 34 und 35 aufweist. Der radial innere Strömungskanal 32, in welchem der Hydrolysekatalysator 24 positioniert ist, ist vom radial äußeren Strömungskanal 33 umgeben, wobei die Gasströmung, in welche die wässrige Harnstofflösung über die Düse 23 eingebracht werden soll, dem radial äußeren Strömungskanal 33 über eine tangential in den radial äußeren Strömungskanal 33 mündende Gaszuführleitung 36 in den radial äußeren Strömungskanal 33 tangential eingebracht werden kann. Bei dieser Gaszuführleitung 36 handelt es sich um denjenigen Abschnitt der Bypassleitung 25, der stromaufwärts des Ammoniakgenerators 22 verläuft. Der stromabwärts des Ammoniakgenerators 22 verlaufende Abschnitt der Bypassleitung 25 kann als Gasabführleitung 37 bezeichnet werden.

Die in tangentialer Richtung in den radial äußeren Strömungskanal 33 eintretende Gasströmung wird durch diese Strömungsführung im Bereich des radial inneren Strömungskanals 33 verdrallt und strömt in Fig. 3 nach oben, wobei gemäß Fig. 3 der radial äußere Strömungskanal 33 oben bzw. benachbart zur Düse 23 in den radial inneren Strömungskanal 32 übergeht, sodass im Bereich der Düse 23, die dem Einbringen der wässrigen Harnstofflösung in die Gasströmung 28 dient, die Gasströmung 28 vom radial äußeren Strömungskanal 33 in den radial inneren Strömungskanal 32 übertritt.

In diesem Übergangsbereich zwischen dem radial äußeren Strömungskanal 33 und dem radial inneren Strömungskanal 32 ist vorzugsweise ferner ein Strömungsverengungsmittel 38 positioniert, welches den Querschnitt des radial inneren Strömungskanals 32 derart reduziert, dass stromabwärts der Düse 23 die Gasströmung 28 beschleunigt wird und so die Harnstofflösung über die Düse 23 in die beschleunigte Gasströmung 28 eingebracht wird.

Bei dem Strömungsverengungsmittel 38 handelt es sich vorzugsweise um eine den Strömungsquerschnitt des radial inneren Strömungskanals 32 verengende Blende 38.

Wie bereits ausgeführt, ist der Hydrolysekatalysator 24 des Ammoniakgenerators 22 des bevorzugten Ausführungsbeispiels zweistufig ausgeführt, nämlich mit einer ersten, in Strömungsrichtung des radial inneren Strömungskanals 32 gesehen stromaufwärtigen und relativ grobzelligen Katalysatorstufe 34 und einer zweiten, in Strömungsrichtung des radial inneren Strömungskanals 32 gesehen stromabwärtigen und relativ feinzelligen Katalysatorstufe 35.

Ein derart zweistufiger Hydrolysekatalysator 24 ist bevorzugt, um eine effektive Umsetzung der wässrigen Harnstofflösung in Ammoniak, Kohlendioxid und Wasserdampf zu unterstützen.

Eine weitere Besonderheit des erfindungsgemäßen Ammoniakgenerators 22 der Fig. 2 und 3 besteht darin, dass die Strömungsrichtung im radial äußeren Strömungskanal 33 entgegengesetzt zur Strömungsrichtung im radial inneren Strömungskanal 32 verläuft, wobei die Gasströmung im äußeren Strömungskanal 33 den radial inneren Strömungskanal 32 zumindest im Bereich der ersten Katalysatorstufe 34 des Hydrolysekatalysators 24 zumindest abschnittsweise überstreift, sodass dann zumindest die erste Katalysatorstufe 34 des Hydrolysekatalysators 24 über die Gasströmung im radial äußeren Strömungskanal 33 temperiert werden kann.

Im gezeigten, bevorzugten Ausführungsbeispiel mündet die tangential in den äußeren Strömungskanal 33 mündende Gaszuführleitung 36 in einen Abschnitt des äußeren Strömungskanals 33, der den radial inneren Strömungskanal 32 in einem Bereich überdeckt, in welchem der Hydrolysekatalysator 24 positioniert ist, nämlich im gezeigten Ausführungsbeispiel gemäß Fig. 3 die zweite Katalysatorstufe 35 des Hydrolysekatalysators 24. Demzufolge überstreift die Gasströmung des radial äußeren Strömungskanals 33 die erste Katalysatorstufe 34 vollständig und die zweite Katalysatorstufe 35 teilweise. Hiermit kann eine besonders vorteilhafte Temperierung des Hydrolysekatalysators 24 im Bereich seiner beiden Katalysatorstufen 34 und 35 realisiert werden.

Im Ausführungsbeispiel der Fig. 2 und 3 wird demnach eine Gasströmung, vorzugsweise ein Teil des Abgases, stromaufwärts der Aufladungseinrichtung 15 entnommen und über den Ammoniakgenerator 22 geleitet, wobei diese Gasströmung dem radialen äußeren Strömungskanal 33 des Gehäuses 29 des Ammoniakgenerators 22 tangential zugeführt wird. Hierbei wird die Gasströmung verdrallt.

Die verdrallte Gasströmung strömt in einem Übergangsbereich, der benachbart zur Düse 23 positioniert ist, in den radial inneren Strömungskanal 32 des Ammoniakgenerators 22 über, also von radial außen nach radial innen, wobei im radial inneren Strömungskanal 32 der Hydrolysekatalysator 24 positioniert ist.

Eine stromaufwärts des Hydrolysekatalysators 24 und stromabwärts der Düse 23 im Bereich des radial inneren Strömungskanals 32 positionierte Blende bzw. Verengungsmittel 38 bewirkt eine Beschleunigung der verdrallten Gasströmung in dem Bereich, in welchem über die Düse 23 die wässrige Harnstofflösung in die Gasströmung eingebracht wird.

Anschließend gelangt die Gasströmung zusammen mit der wässrigen Harnstofflösung in den Bereich des Hydrolysekatalysators 24, wobei der Hydrolysekatalysator 24 gleichförmig mit der Gasströmung und der Harnstofflösung beaufschlagt wird. Im Hydrolysekatalysator erfolgt die Umsetzung von Harnstofflösung in Ammoniak, Kohlendioxid und Wasserdampf. Der Ammoniakgenerator 22 zeichnet sich durch eine hohe Effektivität und kompakte Bauform aus.

Um einen einfachen Austausch des Hydrolysekatalysators 24 zu ermöglichen, ist das Gehäuse 29 zweiteilig aus einem Oberteil und einem Unterteil ausgeführt, die über eine Bandschelle 48 lösbar verbunden sind.

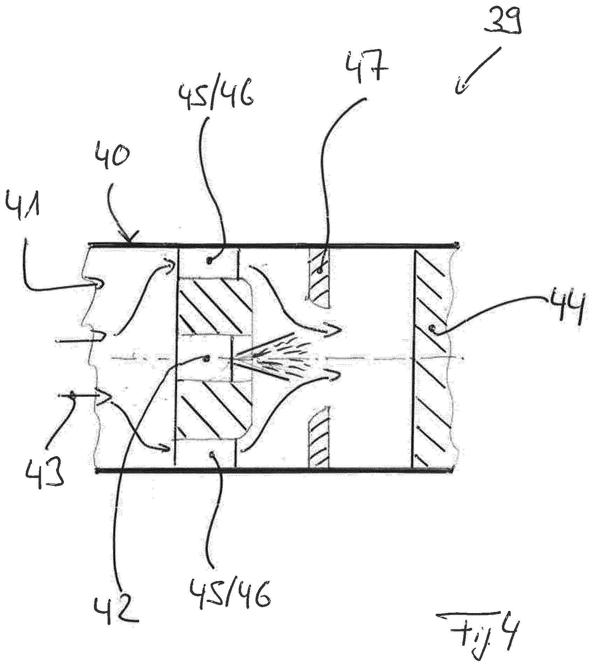

Ein weiteres Beispiel eines nicht erfindungsgemäßen Ammoniakgenerators 39 zeigt Fig. 4. Der Ammoniakgenerator 39 der Fig. 4 verfügt über ein einwandiges Gehäuse 40, welches einen Strömungskanal 41 definiert, wobei in diesem Strömungskanal 41 einerseits eine Düse 42 zum Einspritzen der wässrigen Harnstofflösung in die Gasströmung 43 und andererseits in Strömungsrichtung gesehen stromabwärts der Düse 42 der Hydrolysekatalysator 44 angeordnet ist. In Fig. 4 erfolgt die Verdrallung der Gasströmung 43 vor dem Einspritzen der wässrigen Harnstofflösung in dieselbe über ein Drallschlitze 45 aufweisendes Drallerzeugungsmittel 46, wobei das die Drallschlitze 45 aufweisende Drallerzeugungsmittel 46 in Strömungsrichtung der Gasströmung 43 gesehen die Düse 42 radial außen umgibt. Auch hiermit wird die Gasströmung 43 vor dem Einbringen der Harnstofflösung in dieselbe verdrallt, wobei gemäß Fig. 4 in Strömungsrichtung der Gasströmung 43 gesehen stromabwärts der Düse 42 und stromaufwärts des Hydrolysekatalysators 44 ein Strömungsverengungsmittel 47 in Form einer Blende positioniert ist, um die vorab verdrallte Gasströmung 43 zu beschleunigen und so die wässrige Harnstofflösung in eine verdrallte und beschleunigte Gasströmung 43 einzuspritzen.

Auch in Fig. 4 kann die im Bereich des Hydrolysekatalysators 44 in Ammoniak umzusetzende Harnstofflösung gleichförmig in die Gasströmung 43 eingebracht und der Hydrolysekatalysator 44 gleichförmig mit der Gasströmung und der Harnstofflösung beaufschlagt werden. Die Ausführung der Fig. 2 und 3 ist jedoch zur Gewährleistung einer kompakten Bauform des Ammoniakgenerators bevorzugt.

In den beiden gezeigten Beispielen wird der Drall in der Gasströmung jeweils auf großem Radius erzeugt, also bezogen auf eine Positionierung der Düse 23, 42 radial außen. Dann, wenn im Unterscheid zu den gezeigten Ausführungsbeispielen der Drall in der Gasströmung jeweils auf kleinem Radius erzeugt wird, ist das Drallerzeugungsmittel in Strömungsrichtung der Gasströmung gesehen zwischen Düse und Strömungsverengungsmittel bzw. Blende positioniert.

Als Düsen 23, 42 können in den gezeigten Beispielen Düsen verschiedener Bauart genutzt werden. Vorzugsweise werden luftunterstützte Druckzerstäuber als Düsen 23, 42 verwendet.

### Bezugszeichenliste

- 10: Brennkraftmaschine
- 11: Motor
- 12: Zylinder
- 13: Ladeluft
- 14: Abgas
- 15: Aufladungsvorrichtung
- 16a: Niederdruckturbolader
- 16b: Hochdruckturbolader
- 17a: Niederdruckturbine
- 17b: Hochdruckturbine
- 18a: Niederdruckverdichter
- 18b: Hochdruckverdichter
- 19a: Ladeluftkühler
- 19b: Ladeluftkühler
- 20: Abgasreinigungsvorrichtung
- 21: SCR-Katalysator
- 22: Ammoniakgenerator
- 23: Düse
- 24: Hydrolysekatalysator
- 25: Bypassleitung
- 26: Flansch
- 27: Flansch
- 28: Strömungsrichtung
- 29: Gehäuse
- 30: Gehäusewand
- 31: Gehäusewand
- 32: radial innerer Strömungskanal
- 33: radial äußerer Strömungskanal
- 34: Katalysatorstufe
- 35: Katalysatorstufe
- 36: Gaszuführleitung
- 37: Gasabführleitung
- 38: Strömungsverengungsmittel / Blende
- 39: Ammoniakgenerator
- 40: Gehäuse
- 41: Strömungskanal
- 42: Düse
- 43: Gasströmung
- 44: Hydrolysekatalysator
- 45: Drallschlitze
- 46: Drallerzeugungsmittel
- 47: Strömungsverengungsmittel / Blende
- 48: Bandschelle

## Patentansprüche

1. Ammoniakgenerator für eine Abgasreinigungsvorrichtung einer Brennkraftmaschine, nämlich zur Erzeugung von als Reduktionsmittel für einen SCR-Katalysator der Abgasreinigungsvorrichtung dienendem Ammoniak aus einer Harnstofflösung, mit einer Düse (23; 42), über die in eine Gasströmung die Harnstofflösung einbringbar ist, und mit einem der Düse nachgeschalteten Hydrolysekatalysator (24; 44), über den das in die Gasströmung eingebrachte Harnstofflösung zu Wasserdampf und Kohlendioxid und Ammoniak zersetzbar ist, und ein Drallerzeugungsmittel (33, 36; 46) zur Verdrallung der Gasströmung vorgesehen ist, in welche die Harnstofflösung einbringbar ist, wobei der Ammoniakgenerator ein doppelwandiges Gehäuse (29) aufweist, welches einen radial inneren Strömungskanal (32), in welchem der Hydrolysekatalysator (24) positioniert ist, und einen radial äußeren Strömungskanal (33), welchem die Gasströmung zur Verdrallung derselben tangential zuführbar ist, definiert, wobei der radial äußere Strömungskanal (33) benachbart Düse (23) in den radial inneren Strömungskanal (32) übergeht, **dadurch gekennzeichnet dass** der Hydrolysekatalysator (24) eine erste, in Strömungsrichtung des radial inneren Strömungskanals (32) gesehen stromaufwärtige und relativ grobzellige Katalysatorstufe (34) und eine zweite, in Strömungsrichtung des radial inneren Strömungskanals (32) gesehen stromabwärtige und relativ feinzellige Katalysatorstufe (35) aufweist, wobei die Strömungsrichtung des radial äußeren Strömungskanals (33) entgegengesetzt zur Strömungsrichtung des radial inneren Strömungskanals (32) verläuft, und wobei die Gasströmung des äußeren Strömungskanals (33) den radial inneren Strömungskanal (32) zumindest im Bereich der ersten Katalysatorstufe (34) zumindest abschnittsweise überstreift, und dass die tangential in den äußeren Strömungskanal (33) mündende Gaszuführleitung (36) in einen Abschnitt des äußeren Strömungskanals (33) mündet, der den im radial inneren Strömungskanal (32) positionierten Hydrolysekatalysator (24) abschnittsweise.

2. Ammoniakgenerator nach Anspruch ¹, **dadurch gekennzeichnet, dass** die Gasströmung des äußeren Strömungskanals (33) den radial inneren Strömungskanal (32) im Bereich der ersten Katalysatorstufe (34) vollständig und im Bereich der zweiten Katalysatorstufe (35) zumindest abschnittsweist überstreift.

3. Ammoniakgenerator nach Anspruch 1, **dadurch gekennzeichnet, dass** das Drallerzeugungsmittel (33, 36; 46) die Gasströmung vor dem Einbringen der Harnstofflösung in die Gasströmung verdrallt.

4. Ammoniakgenerator nach Anspruch 1 oder 2, **gekennzeichnet durch** ein Strömungsverengungsmittel (38; 47) zur Beschleunigung der Gasströmung, in welche die Harnstofflösung einbringbar ist, nämlich zur Strömungsverengung der Gasströmung stromabwärts der Düse (23; 42).

5. Ammoniakgenerator nach Anspruch 1, **dadurch gekennzeichnet, dass** der radial äußere Strömungskanal (33) des doppelwandigen Gehäuses (29) zusammen mit einer tangential in denselben mündenden Gaszuführleitung (36) das Drallerzeugungsmittel (33, 36) bildet.

6. Ammoniakgenerator nach einem der Ansprüche 3 bis 4, **dadurch gekennzeichnet, dass** das Strömungsverengungsmittel (38) im Übergangsbereich zwischen dem radial äußeren Strömungskanal (33) des doppelwandigen Gehäuses (29) und dem radial inneren Strömungskanal (32) des doppelwandigen Gehäuses (29) positioniert ist.

7. Ammoniakgenerator nach einem der Ansprüche 3 bis 5, **dadurch gekennzeichnet, dass** das Strömungsverengungsmittel (38) von einer einen Strömungsquerschnitt des radial inneren Strömungskanals (32) verengenden Blende (38) gebildet ist.

8. Brennkraftmaschine, nämlich mit Schweröl betriebene Brennkraftmaschine, mit einem mehrere Zylinder (12) aufweisenden Motor (11), mit einer mindestens einen Turbolader (16a, 16b) aufweisenden Aufladungsvorrichtung (15), mit einer einen SCR-Katalysator (21) aufweisenden Abgasreinigungsvorrichtung (20), und mit einem Ammoniakgenerator (22, 39) zur Erzeugung von als Reduktionsmittel für den SCR-Katalysator (21) dienendem Ammoniak aus einer Harnstofflösung, **dadurch gekennzeichnet, dass** der Ammoniakgenerator (22, 39) nach einem der Ansprüche 1 bis 7 ausgebildet ist.

## Claims

1. An ammonia generator for an emission control device of an internal combustion engine, namely for generating ammonia serving as reduction agent for an SCR catalytic converter of the emission control device from a urea solution, having a nozzle (23; 42), via which the urea solution can be introduced into a gas flow, and having a hydrolysis catalytic converter (24; 44) connected downstream of the nozzle, via which the urea solution introduced into the gas flow can be decomposed into steam and carbon dioxide and ammonia, and a swirl generating means (33, 36; 46) for swirling the gas flow is provided, into which the urea solution can be introduced, wherein the ammonia generator comprises a double-walled housing (29), which defines a radially inner flow duct (32), in which the hydrolysis catalytic converter (24) is positioned, and a radially outer flow duct (33), to which the gas flow for swirling the same can be tangentially fed, wherein the radially outer flow duct (33) adjacent to the nozzle (23) merges into the radially inner flow duct (32), **characterized in that** the hydrolysis catalytic converter (24) comprises a first, seen in flow direction of the radially inner flow duct (32), upstream and relatively coarse-cell catalytic converter stage (34) and a second, seen in flow direction of the radially inner flow ducts (32), downstream and relatively fine-cell catalytic converter stage (35), wherein the flow direction of the radially outer flow duct (33) runs opposite to the flow direction of the radially inner flow duct (32), and wherein the gas flow of the outer flow duct (33) flows around the radially inner flow duct (32) at least in the region of the first catalytic converter stage (34) at least in sections, and **in that** the gas feed line (36) tangentially opening into the outer flow duct (33) opens into a section of the outer flow duct (33) which overlaps the hydrolysis catalytic converter (24) positioned in the radial inner flow duct (32) in sections.

2. The ammonia generator according to claim 1, **characterized in that** the gas flow of the outer flow duct (33) brushes over the radially inner flow duct (32) in the region of the first catalytic converter stage (34) completely and in the region of the second catalytic converter stage (35) at least in sections.

3. The ammonia generator according to claim 1, **characterized in that** the swirl generating means (33, 36; 46) swirls the gas flow prior to introducing the urea solution into the gas flow.

4. The ammonia generator according to claim 1 or 2, **characterized by** a flow constriction means (38; 47) for accelerating the gas flow, into which the urea solution can be introduced, namely for the flow constriction of the gas flow downstream of the nozzle (23; 42).

5. The ammonia generator according to claim 1, **characterized in that** the radially outer flow duct (33) of the double-walled housing (29) together with a gas feed line (36) tangentially opening into the same forms the swirl generating means (33, 36).

6. The ammonia generator according to any one of the claims 3 to 4, **characterized in that** the flow constriction means (38) is positioned in the transition region between the radially outer flow duct (33) of the double-walled housing (29) and the radially inner flow duct (32) of the double-walled housing (29).

7. The ammonia generator according to any one of the claims 3 to 5, **characterized in that** the flow constriction means (38) is formed by an orifice (38) constricting a flow cross section of the radially inner flow duct (32).

8. An internal combustion engine, namely an internal combustion engine operated with heavy fuel oil, having an engine (11) comprising a plurality of cylinders (12), with a supercharging device (15) comprising at least one turbocharger (16a, 16b), having an emission control device (20) comprising an SCR catalytic converter (21), and having an ammonia generator (22, 39) for generating ammonia as reduction agent for the SCR catalytic converter (21) from a urea solution, **characterized in that** the ammonia generator (22, 39) is designed according to any one of the claims 1 to 7.

## Revendications

1. Générateur d'ammoniaque pour un dispositif de purification de gaz d'échappement d'un moteur à combustion interne, à savoir pour produire de l'ammoniaque servant de moyen de réduction pour un catalyseur SCR du dispositif de purification de gaz d'échappement à partir d'une solution d'ammoniaque, comportant une buse (23 ; 42), par l'intermédiaire de laquelle la solution d'urée peut être introduite dans un flux de gaz, et comportant un catalyseur d'hydrolyse (24 ; 44) raccordé en aval de la buse, par l'intermédiaire duquel la solution d'urée introduite dans le flux de gaz peut être décomposée en vapeur d'eau et dioxyde de carbone et ammoniaque, et un moyen de génération de tourbillonnement (33, 36 ; 46) est prévu afin de produire un tourbillonnement du flux de gaz, dans lequel la solution d'urée peut être introduite, dans lequel le générateur d'ammoniaque présente un logement (29) à double paroi, qui définit un canal d'écoulement intérieur radial (32), dans lequel le catalyseur d'hydrolyse (24) est positionné, et un canal d'écoulement extérieur radial (33), dans lequel le flux de gaz peut être alimenté tangentiellement à celui-ci afin de produire un tourbillonnement, dans lequel la buse (23) voisine du canal d'écoulement extérieur radial (33) aboutit au canal d'écoulement intérieur radial (32), **caractérisé en ce que** le catalyseur d'hydrolyse (24) présente un premier étage de catalyseur (34) du côté de l'amont vu dans la direction d'écoulement du canal d'écoulement (32) intérieur radial et à cellules relativement grosses et un deuxième étage de catalyseur (35) du côté de l'aval vu dans la direction d'écoulement du canal d'écoulement (32) intérieur radial et à cellules relativement petites, dans lequel la direction d'écoulement du canal d'écoulement extérieur radial (33) s'étend en sens contraire à la direction d'écoulement du canal d'écoulement intérieur radial (32), et dans lequel l'écoulement de gaz du canal d'écoulement extérieur (33) recouvre au moins par portions le canal d'écoulement intérieur radial (32) au moins au niveau du premier étage de catalyseur (34) et **en ce que** la conduite d'alimentation de gaz (36) débouchant tangentiellement dans le canal d'écoulement extérieur (33) débouche dans une portion du canal d'écoulement extérieur (33), qui recouvre par portions le catalyseur d'hydrolyse (24) positionné dans le canal d'écoulement intérieur radial (32).

2. Générateur d'ammoniaque selon la revendication 1, **caractérisé en ce que** le flux de gaz du canal d'écoulement extérieur (33) recouvre totalement le canal d'écoulement intérieur radial (32) au niveau du premier étage de catalyseur (34) et au moins par portions au niveau du deuxième étage de catalyseur (35).

3. Générateur d'ammoniaque selon la revendication 1, **caractérisé en ce que** le moyen de génération de tourbillonnement (33, 36 ; 46) fait tourbillonner le flux de gaz avant l'introduction de la solution d'urée dans le flux de gaz.

4. Générateur d'ammoniaque selon la revendication 1 ou 2, **caractérisé par** un moyen de rétrécissement d'écoulement (38 ; 47) pour accélérer le flux de gaz, dans lequel la solution d'urée peut être introduite, à savoir à des fins de rétrécissement du flux de gaz en aval de la buse (23 ; 42).

5. Générateur d'ammoniaque selon la revendication 1, **caractérisé en ce que** le canal d'écoulement extérieur radial (33) du logement à double paroi (29) forme le moyen de génération de tourbillonnement (33, 36) conjointement à une conduite d'alimentation de gaz (36) débouchant tangentiellement dans celui-ci.

6. Générateur d'ammoniaque selon une des revendications 3 à 4, **caractérisé en ce que** le moyen de rétrécissement d'écoulement (38) est positionné dans la zone de transition entre le canal d'écoulement (33) extérieur radial du logement à double paroi (29) et le canal d'écoulement intérieur radial (32) du logement à double paroi (29).

7. Générateur d'ammoniaque selon une des revendications 3 à 5, **caractérisé en ce que** le moyen de rétrécissement d'écoulement (38) est formé par un diaphragme (38) rétrécissant une section transversale d'écoulement du canal d'écoulement intérieur radial (32).

8. Moteur à combustion interne, à savoir moteur à combustion interne fonctionnant au pétrole brut, comportant un moteur (11) présentant plusieurs cylindres (12), comportant un dispositif de charge (15) présentant au moins un turbocompresseur (16a, 16b), comportant un dispositif de purification de gaz d'échappement (20) présentant un catalyseur SCR (21) et comportant un générateur d'ammoniaque (22, 39) pour produire de l'ammoniaque servant du moyen de réduction pour le catalyseur SCR (21) à partir d'une solution d'urée, **caractérisé en ce que** le générateur d'ammoniaque (22, 39) est conçu selon une des revendications 1 à 7.
